# EUROPEAN PATENT APPLICATION

(11) **EP 4 379 861 A1**
(43) Date of publication of application: **05.06.2024**
(21) Application number: 22874129.4
(22) Date of filing: 10.03.2022
(51) Int. Cl.: H01M 4/38, H01M 4/134

(54) **NOVEL COMPOSITE MATERIAL FOR SECONDARY LITHIUM BATTERY, PREPARATION METHOD THEREFOR AND APPLICATION THEREOF**

(30) Priority: 29.09.2021 CN 202111151405
(71) Applicant: Tianmulake Excellent Anode Materials Co., Ltd., Liyang, Jiangsu 213330 (CN)
(72) Inventor: LUO, Fei, Kunlun Street Liyang, Jiangsu 213330 (CN)
(74) Representative: Glück Kritzenberger Patentanwälte PartGmbB
(86) International application number: PCT/CN2022/080110
(87) International publication number: WO 2023/050726

(57) **Abstract**

A novel composite material for a secondary lithium battery, a preparation method therefor and an application thereof. The novel composite material comprises: nano-silicon and carbon atoms. The carbon atoms are uniformly distributed in the nano-silicon at an atomic level; the carbon atoms and silicon atoms are combined to form an amorphous Si-C bond, and no SiC crystal peak exists in an X-ray diffraction (XRD) energy spectrum; in solid nuclear magnetic resonance (NMR) detection of the novel composite material, a ²⁹SiNMR chart shows that, when the silicon peak is between -70 ppm and -130 ppm, there is a Si-C resonance peak between 20 ppm and -20 ppm; the area ratio of the Si-C resonance peak to the silicon peak is (0.1, 5.0); the average particle size D50 of the novel composite material is 1 nm-50 ¡lm; the mass of the carbon atoms accounts for 0.5%-50% of the mass of the novel composite material.

## Description

This application claims priority for Chinese patent application No. 202111151405.1, entitled "NOVEL COMPOSITE MATERIAL FOR SECONDARY LITHIUM BATTERY, PREPARATION METHOD THEREFOR AND APPLICATION THEREOF", filed with China National Intellectual Property Administration on September 29, 2021.

### BACKGROUND OF THE INVENTION

### 1. Technical Field

The present invention relates to the technical field of materials, in particular to a novel composite material for a secondary lithium battery, a preparation method therefor and an application thereof.

### 2. Description of Related Art

In recent years, due to the rapid advancement of electronic technology and the information industry, the development prospect of lithium-ion batteries becomes increasingly vast. They have found widespread applications in portable devices such as mobile phones, notebook computers, and digital cameras. To keep up with the increasing demand for lithium-ion batteries with long cycle life, high energy density, and outstanding rate performance in electric vehicles and large energy storage systems, numerous researchers are actively investigating cost-effective and high-quality electrode materials.

Silicon has gained considerable interest among researchers as a potential negative electrode material due to its exceptional theoretical specific capacity (4200 mAh · g⁻¹). However, the lithiation process of silicon results in substantial volume expansion, leading to structural damage and an unstable solid electrolyte interface (SEI) film. Furthermore, the intrinsic electronic conductivity of silicon is poor, significantly impeding its electrochemical performance. These challenges pose significant barriers to the practical implementation of silicon-based negative electrodes.

Encapsulating silicon nanoparticles within a carbon material to create a C/Si composite material has emerged as a highly effective approach, which not only mitigates the volume expansion issues of silicon but also harnesses the advantages of both silicon (high capacity) and carbon (excellent conductivity and cycle stability). However, nano-materials have a high specific surface energy, which makes them prone to agglomeration and difficult to uniformly disperse within a carbon matrix. As a consequence, the electrochemical performance improvement is compromised. Although CN 106299277A discloses a silicon-carbon composite negative electrode material for lithium-ion batteries, its use of mechanical mixing fails to achieve a desired level of mixing between silicon and carbon materials, consequently offering limited enhancements in cycle performance.

### BRIEF SUMMARY OF THE INVENTION

The embodiments of the present invention provide a novel composite material for a secondary lithium battery, a preparation method therefor and an application thereof. By fully mixing and co-depositing a silicon source and a carbon source, carbon atoms are uniformly embedded in a nano-silicon material at an atomic level. Compared with ordinary nano-silicon materials or silicon-carbon composite materials, this material exhibits enhanced structural stability and reduced volume expansion in a lithium dis-embedding process, having better cycle performance when utilized as a negative electrode in lithium batteries.

In a first aspect, an embodiment of the present invention provides a novel composite material for a secondary lithium battery, including: nano-silicon and carbon atoms, wherein the carbon atoms are uniformly distributed in the nano-silicon at an atomic level; the carbon atoms are bonded to silicon atoms to form amorphous Si-C bonds, and no SiC crystallization peak exists in an X-ray diffraction (XRD) energy spectrum;
in solid-state nuclear magnetic resonance (NMR) detection of the novel composite material, a ²⁹Si NMR spectrum shows that, when a silicon peak is between -70 ppm and -130 ppm, there is a Si-C resonance peak between 20 ppm and -20 ppm; an area ratio of the Si-C resonance peak to the silicon peak is (0.1, 5.0);
an average particle size D₅₀ of the novel composite material is 1 nm-50 µm; and a mass of the carbon atoms accounts for 0.5%-50% of a mass of the novel composite material.

Preferably, the novel composite material also contains oxygen, which is dispersed in the nano-silicon material or on a surface of the material, and a mass of the oxygen accounts for 0.1%-20% of the mass of the novel composite material.

Preferably, the novel composite material is of a monomer structure, or the novel composite material is deposited inside or on a surface of a matrix material; and the monomer structure includes nanoparticles or nanowires.

In a second aspect, an embodiment of the present invention provides a preparation method for the novel composite material for a secondary lithium battery described in the first aspect, including:
simultaneously introducing a silicon source, a carbon source, and a carrier gas into a reaction vessel in proportion, and controlling a temperature of the reaction vessel to be 450°C-1000°C and a reaction pressure to be 0.1 atm-10 atm; and
performing cooling after the reaction is finished to obtain a novel composite material for a secondary lithium battery, or introducing, during the reaction, a product generated by the reaction into a cooling chamber to obtain a novel composite material for a secondary lithium battery.

Preferably, the silicon source is silicon-containing vapor, specifically including one or more of monosilane, disilane, tetrafluorosilane, hexamethyldisilane and dimethylsiloxane;
the carbon source includes one or more of acetylene, methane, propylene, ethylene, propane or ethanol; and
the carrier gas includes one or more of hydrogen, nitrogen and argon.

In a third aspect, an embodiment of the present invention provides a negative plate including the novel composite material for the secondary lithium battery described in the first aspect.

In a fourth aspect, an embodiment of the present invention provides a lithium battery including the novel composite material for the secondary lithium battery described in the first aspect.

According to the novel composite material for the secondary lithium battery provided by the present invention, by fully mixing and co-depositing a silicon source and a carbon source, carbon atoms are uniformly embedded in a nano-silicon material at an atomic level. Compared with ordinary nano-silicon materials or silicon-carbon composite materials, this material exhibits enhanced structural stability and reduced volume expansion in a lithium dis-embedding process, having better cycle performance when utilized as a negative electrode in lithium batteries.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a flowchart of a preparation method for a novel composite material for a secondary lithium battery provided by an embodiment of the present invention;
Fig. 2 is an XRD pattern of a novel composite material provided in Embodiment 1 of the present invention;
Fig. 3 is a ²⁹Si NMR pattern of a novel composite material provided in Embodiment 1 of the present invention; and
Fig. 4 is a ²⁹Si NMR pattern of a novel composite material provided in Embodiment 3 of the present invention.

### DETAILED DESCRIPTION OF THE INVENTION

The present invention will be further explained below by referring to drawings and specific embodiments, but it should be understood that these embodiments are only for more detailed explanation, and should not be construed as limiting the present invention in any way, that is, not intended to limit the scope of protection of the present invention.

A novel composite material for a secondary lithium battery provided by the present invention includes nano-silicon and carbon atoms, wherein the carbon atoms are uniformly distributed in the nano-silicon at an atomic level; the carbon atoms are bonded to silicon atoms to form amorphous Si-C bonds, and no SiC crystallization peak exists in an X-ray diffraction (XRD) energy spectrum;
in solid-state nuclear magnetic resonance (NMR) detection of the novel composite material, a ²⁹Si NMR spectrum shows that, when a silicon peak is between -70 ppm and -130 ppm, there is a Si-C resonance peak between 20 ppm and -20 ppm; an area ratio of the Si-C resonance peak to the silicon peak is 0.1-5.0;
an average particle size D₅₀ of the novel composite material is 1 nm-50 µm; and a mass of the carbon atoms accounts for 0.5%-50% of a mass of the novel composite material.

In an alternative solution, the novel composite material also contains oxygen, which is dispersed in the nano-silicon material or on a surface of the material, and a mass of the oxygen accounts for 0.1%-20% of the mass of the novel composite material.

The novel composite material provided by the present invention is of a monomer structure, and the monomer structure includes nanoparticles or nanowires; or the novel composite material is deposited inside or on a surface of a matrix material.

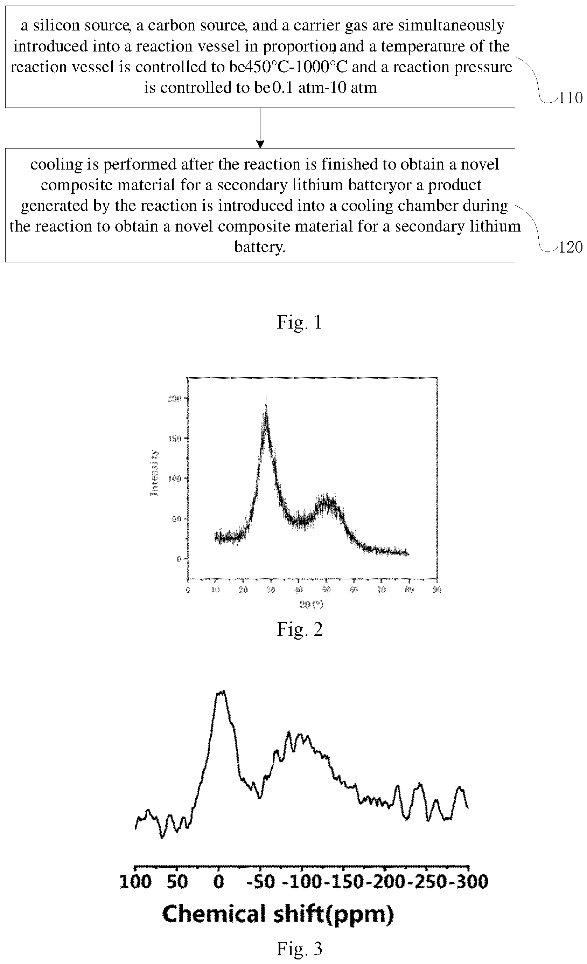

The novel composite material for the secondary lithium battery provided by the present invention can be prepared by the preparation method shown in Fig. 1, including the following steps.

Step 110, a silicon source, a carbon source, and a carrier gas are simultaneously introduced into a reaction vessel in proportion, and a temperature of the reaction vessel is controlled to be 450°C-1000°C and a reaction pressure is controlled to be 0.1 atm-10 atm.

Specifically, the silicon source is silicon-containing vapor, specifically including one or more of monosilane, disilane, tetrafluorosilane, hexamethyldisilane and dimethylsiloxane.

The carbon source includes one or more of acetylene, methane, propylene, ethylene, propane or ethanol.

The carrier gas includes one or more of hydrogen, nitrogen and argon.

Step 120, cooling is performed after the reaction is finished to obtain a novel composite material for a secondary lithium battery, or a product generated by the reaction is introduced into a cooling chamber during the reaction to obtain a novel composite material for a secondary lithium battery.

Specifically, reaction results can be controlled by removing the gas sources.

According to the novel composite material for the secondary lithium battery provided by the present invention, by fully mixing and co-depositing a silicon source and a carbon source, carbon atoms are uniformly embedded in a nano-silicon material at an atomic level. The novel composite material can be used for preparing negative plates which are applied to secondary lithium batteries such as lithium-ion batteries and solid-state lithium batteries. Compared with ordinary nano-silicon materials or silicon-carbon composite materials, this material exhibits enhanced structural stability and reduced volume expansion in a lithium dis-embedding process, having better cycle performance when utilized as a negative electrode in lithium batteries.

In order to better understand the technical solutions provided by the present invention, the specific process of preparing the novel composite material for the secondary lithium battery by the method provided in the above embodiment of the present invention, the method of its application in a secondary battery, and battery characteristics are described below with several specific examples.

### Embodiment 1

A mixture of 1 L/min of silane, 1 L/min of methane and 1 L/min of argon is introduced into a deposition chamber of a fluidized bed device at 700°C and 1 atm; and
a novel composite material of the invention is obtained in a collection chamber of the fluidized bed device.

It is tested, by a carbon-sulfur analyzer, that the carbon content of the novel composite material is 8%.

The obtained novel composite material is subjected to XRD testing to obtain an XRD pattern. The results are shown in Fig. 2, from which it can be seen that there is no SiC crystallization peak in the curve, which indicates that Si-C is amorphous.

The novel composite material is subjected to ²⁹Si spectrum solid-state NMR testing to obtain a ²⁹Si NMR pattern, as shown by the curve in Fig. 3, from which it can be seen that a silicon resonance peak appears near -100 ppm; a Si-C resonance peak appears near 0 ppm, which indicates that carbon is dispersed into the silicon material at an atomic level; and the area ratio of the Si-C resonance peak to the silicon resonance peak is 1.8.

### Embodiment 2

A mixture of 1 L/min of silane, 0.2 L/min of methane and 1 L/min of argon is introduced into a deposition chamber of a fluidized bed device at 700°C and 1 atm; and
a novel composite material of the invention is obtained in a collection chamber of the fluidized bed device.

It is tested, by a carbon-sulfur analyzer, that the carbon content of the novel composite material is 2%.

### Embodiment 3

A mixture of 1 L/min of silane, 0.2 L/min of methane and 1 L/min of argon is introduced into a deposition chamber of a fluidized bed device at 700°C and 1 atm, wherein a porous carbon material in a fluidized state is in the fluidized bed; and
a novel composite material deposited on a surface and inside of the porous carbon material is obtained in a collection chamber of the fluidized bed device.

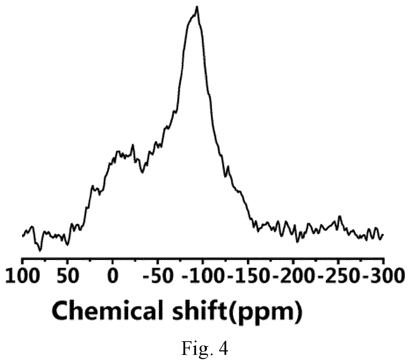

The novel composite material is subjected to ²⁹Si spectrum solid-state NMR testing to obtain a ²⁹Si NMR pattern, as shown by the curve in Fig. 4, from which it can be seen that a silicon resonance peak appears near -80 ppm; a Si-C resonance peak appears near -10 ppm, which indicates that carbon is dispersed into the silicon material at an atomic level; and the area ratio of the Si-C resonance peak to the silicon resonance peak is 0.5, indicating that with the decrease of the relative concentration of methane, the content of carbon atoms in the silicon-based material decreases.

### Embodiment 4

A mixture of 1 L/min of silane, 1 L/min of methane and 1 L/min of argon is introduced into a rotary furnace at 700°C and 1 atm; and
the reaction ended after gas introduction is stopped, and a novel composite material of the invention is obtained by cooling.

It is tested, by a carbon-sulfur analyzer, that the carbon content of the novel composite material is 7%.

### Embodiment 5

A mixture of 1 L/min of silane, 1 L/min of methane and 1 L/min of argon is introduced into a rotary furnace at 900°C and 1 atm; and
the reaction ended after gas introduction is stopped, and a novel composite material of the invention is obtained by cooling.

It is tested, by a carbon-sulfur analyzer, that the carbon content of the novel composite material is 9%.

### Embodiment 6

A mixture of 1 L/min of silane, 1 L/min of methane and 1 L/min of argon is introduced into a deposition chamber of a fluidized bed device at 700°C and 2 atm; and
a novel composite material of the invention is obtained in a collection chamber of the fluidized bed device.

It is tested, by a carbon-sulfur analyzer, that the carbon content of the novel composite material is 10%.

### Embodiment 7

A mixture of 1 L/min of silane, 1 L/min of acetylene and 1 L/min of argon is introduced into a deposition chamber of a fluidized bed device at 700°C and 1 atm; and
a novel composite material of the invention is obtained in a collection chamber of the fluidized bed device.

It is tested, by a carbon-sulfur analyzer, that the carbon content of the novel composite material is 15%.

### Embodiment 8

A mixture of 1 L/min of silane, 3 L/min of acetylene and 1 L/min of argon is introduced into a deposition chamber of a fluidized bed device at 700°C and 1 atm; and
a novel composite material of the invention is obtained in a collection chamber of the fluidized bed device.

It is tested, by a carbon-sulfur analyzer, that the carbon content of the novel composite material is 35%.

### Embodiment 9

A mixture of 1 L/min of silicon tetrafluoride, 1 L/min of methane and 1 L/min of argon is introduced into a deposition chamber of a fluidized bed device at 700°C and 1 atm; and
a novel composite material of the invention is obtained in a collection chamber of the fluidized bed device.

It is tested, by a carbon-sulfur analyzer, that the carbon content of the novel composite material is 5%.

### Embodiment 10

A mixture of 1 L/min of dimethyl siloxane, 1 L/min of methane and 1 L/min of argon is introduced into a deposition chamber of a fluidized bed device at 700°C and 1 atm; and
a novel composite material of the invention is obtained in a collection chamber of the fluidized bed device.

It is tested, by a carbon-sulfur analyzer, that the carbon content of the novel composite material is 4%, and the oxygen content is 10%.

### Embodiment 11

A mixture of 1 L/min of dimethyl siloxane, 1 L/min of methane and 1 L/min of hydrogen is introduced into a deposition chamber of a fluidized bed device at 700°C and 1 atm; and
a novel composite material of the invention is obtained in a collection chamber of the fluidized bed device.

It is tested, by a carbon-sulfur analyzer, that the carbon content of the novel composite material is 8%.

In order to better illustrate the characteristics of the novel composite material of the invention, Comparative example 1 and Comparative example 2 are used for comparison.

### Comparative example 1

A mixture of 1 L/min of silane and 1 L/min of argon is introduced into a deposition chamber of a fluidized bed device at 700°C and 1 atm; and
a silicon-based material is obtained in a collection chamber of the fluidized bed device.

It is tested, by a carbon-sulfur analyzer, that there is no carbon in the novel composite material.

### Comparative example 2

The silicon-based material obtained in Comparative example 1 is subjected to gaseous-phase carbon coating with a carbon coating amount of 8%.

The novel composite materials obtained in the above embodiments and the materials obtained in the comparative examples are prepared into lithium button batteries respectively, and then the capacity and initial efficiency are tested. The test results are listed in Table 1. In addition, the novel composite materials obtained in the above embodiments and the materials obtained in the comparative examples are compounded with commercial graphite in proportion into composite materials of 450 mAh/g respectively, which are then assembled with lithium cobalt oxides to form button-type full cells; and the button-type full cells are made to cycle at 1C/1C to evaluate the cycle performance. Data are recorded in Table 1 for comparison.

**Table 1**

| | Capacity/mAh • g⁻¹ | Initial efficiency/% | 300-cycle capacity retention rate/% |
|---|---|---|---|
| Embodiment 1 | 3250.3 | 88.4 | 88.1 |
| Embodiment 2 | 3520.5 | 89.4 | 82.6 |
| Embodiment 3 | 1576.9 | 90.3 | 91.2 |
| Embodiment 4 | 3314.4 | 88.8 | 87.2 |
| Embodiment 5 | 3132 | 88.2 | 88.9 |
| Embodiment 6 | 3096.5 | 87.9 | 89.6 |
| Embodiment 7 | 2897.3 | 87.1 | 89.7 |
| Embodiment 8 | 2179.7 | 85.3 | 87.6 |
| Embodiment 9 | 3380.5 | 89.1 | 86.6 |
| Embodiment 10 | 3447.5 | 83.7 | 86.1 |
| Embodiment 11 | 3263.5 | 85.9 | 88.7 |
| Comparative example 1 | 3710.3 | 89 | 70.2 |
| Comparative example 2 | 3205 | 87.2 | 78.5 |

By comparison, it can be seen that the uniform distribution of carbon atoms in the materials of various embodiments of the present invention can improve the cycle performance of the battery. With the increase of the flow rate of carbon source gas, the carbon content increases, and the monomer capacity and initial efficiency slightly decrease, but the cycle performance is obviously improved compared with Comparative examples 1 and 2. The silicon-based material of Embodiment 3 deposited in porous carbon can have better cycle performance. When the materials in Embodiments 10 and 11 contain oxygen, the initial efficiency is low, but the cycle performance is still relatively good. Despite the observed improvement in battery cycle performance through carbon coating in the two comparative examples, a significant gap still exists compared to the materials with uniformly distributed carbon in the embodiments of the present invention.

The above-mentioned specific embodiments further explain the purpose, technical solutions and beneficial effects of the present invention in detail. It should be understood that the above embodiments are only specific ones of the present invention and are not used to limit the scope of protection of the present invention. Any modification, equivalent substitution, improvement, etc. made within the spirit and principles of the present invention should be included in the scope of protection of the present invention.

## Claims

1. A novel composite material for a secondary lithium battery, **characterized in that** the composite material comprises nano-silicon and carbon atoms, wherein the carbon atoms are uniformly distributed in the nano-silicon at an atomic level; the carbon atoms are bonded to silicon atoms to form amorphous Si-C bonds, and there is no crystallization peak of SiC in X-ray diffraction (XRD) spectrum;
the ²⁹Si NMR spectrum of the novel composite material by solid-state nuclear magnetic resonance (NMR) detection of the novel composite material shows that when a silicon peak is between -70 ppm and -130 ppm, there is a Si-C resonance peak between 20 ppm and -20 ppm; an area ratio of the Si-C resonance peak to the silicon peak is (0.1, 5.0);
an average particle size D₅₀ of the novel composite material is between 1 nm and 50 µm; and a mass of the carbon atom accounts for 0.5%-50% of a mass of the novel composite material.

2. The novel composite material for the secondary lithium battery according to claim 1, wherein the novel composite material also contains oxygen element, which is dispersed inside the nano-silicon material or on a surface of the material, and a mass of the oxygen element accounts for 0.1%-20% of the mass of the novel composite material.

3. The novel composite material for the secondary lithium battery according to claim 1, wherein the novel composite material is of a monomer structure, or the novel composite material is deposited inside or on a surface of a matrix material; and the monomer structure comprises nanoparticles or nanowires.

4. A preparation method for the novel composite material of the secondary lithium battery according to claim 1, comprising:
a silicon source, a carbon source and a carrier gas is simultaneously introduced into a reaction vessel in proportion, and a temperature of the reaction vessel is controlled to be 450°C-1000°C, and a reaction pressure is 0.1atm-10atm; and
cooling is performed after the reaction is finished to obtain a novel composite material for a secondary lithium battery, or during the reaction, a product generated by the reaction is introduced into a cooling chamber to obtain a novel composite material for a secondary lithium battery.

5. The preparation method according to claim 1, wherein the silicon source is silicon-containing vapor, wherein it comprises one or more of monosilane, disilane, tetrafluorosilane, hexamethyldisilane and dimethylsiloxane;
the carbon source comprises one or more of acetylene, methane, propylene, ethylene, propane or ethanol; and
the carrier gas comprises one or more of hydrogen, nitrogen and argon.

6. A negative plate comprises the novel composite material for the secondary lithium battery according to claim 1.

7. A lithium battery comprises the novel composite material for the secondary lithium battery according to claim 1.
